# DEMANDE DE BREVET EUROPEEN

(11) **EP 0 763 381 A1**
(43) Date de publication de la demande: **19.03.1997**
(21) Numéro de dépôt: 96440067.5
(22) Date de dépôt: 23.08.1996
(51) Int. Cl.: B02C 13/04, B02C 13/282

(54) **Dispositif de broyeur permettant le défibrage, le décorticage ou le démoellage de plantes**

(30) Priorité: 23.08.1995 FR 9510119
(71) Demandeur: LA CHANVRIERE DE L'AUBE, 10200 Bar sur Aube (FR)
(72) Inventeur: Geoffroy, Bernard, F-52120 Orges (FR)
(74) Mandataire: Arbousse-Bastide, Jean-Claude Philippe

(57) **Abrégé**

Dispositif de broyeur permettant le défibrage, le décorticage ou le démoellage de plantes.

Il comprend d'une part une cage cylindrique (2) dont la partie supérieure comprend, d'un côté une trémie (21) d'alimentation et de l'autre une bouche d'évacuation (22), et dont la partie inférieure hémicylindrique (30, 40) est recouverte intérieurement de deux grilles d'attaque (31, 41) longitudinales juxtaposées interchangeables; et d'autre part des marteaux (13) montés pivotants sur des disques (10) coaxiaux montés sur un arbre central (1) mû en rotation, en regard de chacune des extrémités duquel le carter extérieur (14) comporte une ouverture (15) permettant le passage d'un flux d'air de l'extérieur vers l'intérieur sous l'effet d'aspiration créé par le mouvement de rotation.

## Description

La présente invention a pour objet un dispositif de broyeur permettant le défibrage, le décorticage ou le démoellage de plantes à fibres libériennes telles que le chanvre, le lin, le sorgho, le kenaff etc.

Les différents traitements de défibrage, décorticage ou de démoellage sont généralement réalisés dans un trommel comprenant une cage cylindrique à l'intérieur de laquelle tourne axialement un arbre muni radialement de dents et/ou de marteaux.

La matière à traiter est introduite par une extrémité de la cage dans laquelle elle est broyée afin de réaliser la séparation des différents éléments qui la constituent, et qui sortent par l'autre extrémité.

Ces dispositifs présentent de nombreux inconvénients, en effet, la matière à broyer, particulièrement lorsqu'elle est principalement constituée de fibres, a tendance à s'enrouler autour des extrémités de l'arbre à proximité des paliers qui le portent, avec pour conséquence soit un blocage suivi d'une casse mécanique, soit, ce qui est très fréquent, des échauffements de la matière qui s'enflamme.

De plus, les opérations de broyage génèrent beaucoup de poussière qui, outre des inconvénients pour les opérateurs, encrassent les éléments en mouvement, qui peuvent subir des dommages.

Enfin, la vitesse d'exécution et la relative dureté des matières à broyer entraînent une usure rapide des moyens de broyage, notamment au niveau de la face interne de la cage cylindrique contre laquelle lesdites matières sont écrasées par les marteaux.

La présente invention a pour but de proposer un dispositif de broyeur permettant de remédier à ces divers inconvénients.

Le dispositif de broyeur objet de la présente invention se caractérise essentiellement en ce qu'il comprend d'une part une cage cylindrique d'axe horizontal dont la partie supérieure comprend, d'un côté une trémie d'alimentation et de l'autre une bouche d'évacuation, et dont la partie inférieure hémicylindrique est recouverte intérieurement de deux grilles d'attaque longitudinales juxtaposées interchangeables; et en ce que d'autre part des marteaux montés pivotants sur des disques coaxiaux montés sur un arbre central mû en rotation, en regard de chacune des extrémités duquel le carter extérieur comporte une ouverture permettant le passage d'un flux d'air de l'extérieur vers l'intérieur sous l'effet d'aspiration créé par le mouvement de rotation.

Selon une caractéristique additionnelle du dispositif selon l'invention la bouche d'évacuation est connectée à un moyen d'aspiration.

Selon une autre caractéristique additionnelle du dispositif selon l'invention, les grilles d'attaque comportent des reliefs en forme de V, répartis en quinconce.

Les avantages et les caractéristiques de la présente invention ressortiront plus clairement de la description qui suit et qui se rapporte au dessin annexé, lequel en représente un mode de réalisation non limitatif.

Dans le dessin annexé:
- la figure 1 représente une vue simplifiée en élévation d'un dispositif de broyeur selon l'invention.
- la figure 2 représente une vue schématique partielle en élévation du même dispositif.
- la figure 3 représente une vue partielle en perspective d'un élément du même dispositif.

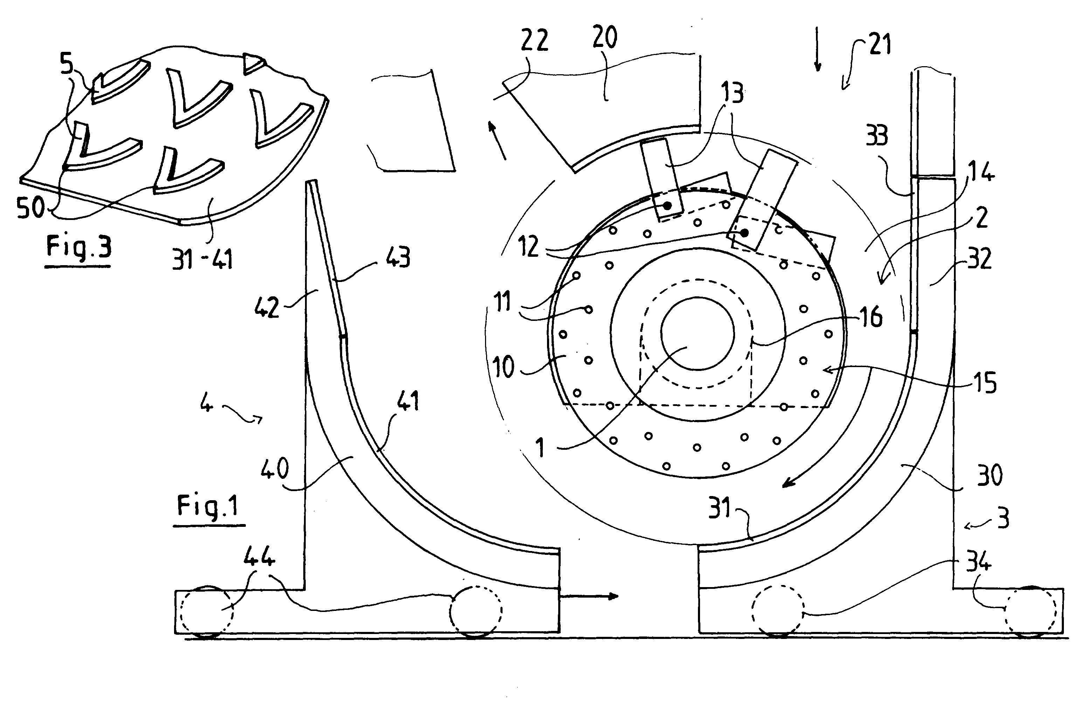

Si on se réfère à la figure 1 on peut voir qu'un dispositif de broyeur selon l'invention comporte un arbre 1 mobile en rotation dans une cage cylindrique 2 essentiellement constituée supérieurement d'un châssis fixe 20 comprenant une trémie d'alimentation 21 et une bouche d'évacuation 22, et inférieurement du rapprochement de deux châssis mobiles 3 et 4.

L'arbre 1 porte des disques coaxiaux 10, dont un seul est visible sur la figure, dans lesquels sont pratiqués des trous 11 destinés à la fixation de pivots 12 sur chacun desquels est monté pivotant un marteau 13 de type connu, constitué par exemple d'une plaque de métal dont l'extrémité libre est courbe.

Les faces internes des châssis 3 et 4 sont garnies dans leurs parties courbes, respectivement 30 et 40, de grilles d'attaque, respectivement 31 et 41, aisément démontables et interchangeables, et dans leurs parties supérieures rectilignes, respectivement 32 et 42, dans le prolongement respectivement de la trémie 21 et de la bouche d'évacuation 22, de plaques d'usure, respectivement 33 et 43.

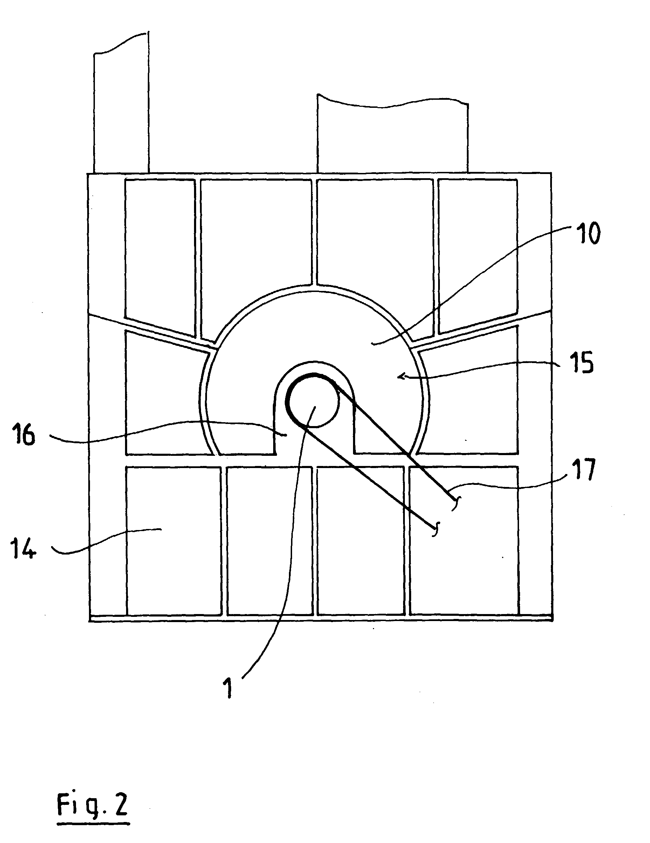

Si on se réfère à la figure 2, on peut voir le carter extérieur 14 et l'un des paliers 16 portant l'arbre 1 qui est entraîné en rotation par une courroie 17.

Le carter 14 comporte au niveau du palier 16, latéralement et au-dessus, une ouverture 15, la face opposée, non visible, comportant une ouverture 15 similaire.

Les ouvertures 15 permettent, sous l'action de la rotation de l'arbre 1 et des disques 10, et plus particulièrement des marteaux 13, l'entrée d'un flux d'air dans la cage 2, qui permet d'éviter que les fibres de la matière à traiter ne s'enroulent autour de l'arbre 1 entre les paliers 16 et les disques 10 extrêmes.

Le flux d'air permet également de mettre en suspension la poussière qui peut être plus aisément évacuée par un moyen d'aspiration de type connu, non représenté, placé sur la bouche d'évacuation 22.

Si on se réfère maintenant à la figure 3 on peut voir que les grilles d'attaque 31 et 41 comportent en surface des reliefs 5 en forme de V disposés en quinconce, la matière à traiter étant broyée entre les marteaux 13 et ces reliefs 5.

Du fait de l'abondance de matière, l'usure est maximum au débouché de la trémie 21 au niveau de la pièce d'usure 33 et de la partie supérieure de la grille d'attaque 31, aussi, lorsque celle-ci présente une usure trop importante il convient de la permuter avec la grille d'attaque 41.

Le remplacement des grilles d'attaque 31 et 41 est effectué en déplaçant les châssis 3 et 4 qui sont montés sur des roues, respectivement 34 et 44, la fixation sur le châssis fixe 20, autour de l'arbre 1, étant réalisée par bridage.

L'orientation des reliefs 5 a peu d'influence sur la qualité du broyage, le résultat obtenu est le même que les pointes 50 des reliefs 5 soient dirigées vers le haut ou vers le bas, en sorte que cela offre la possibilité de permutations supplémentaires, augmentant encore la durée de vie d'un jeu de grilles d'attaque.

## Revendications

1. Dispositif de broyeur permettant le défibrage, le décorticage ou le démoellage de plantes, caractérisé en ce qu'il comprend d'une part une cage cylindrique (2) dont la partie supérieure comprend, d'un côté une trémie (21) d'alimentation et de l'autre une bouche d'évacuation (22), et dont la partie inférieure hémicylindrique (30, 40) est recouverte intérieurement de deux grilles d'attaque (31, 41) longitudinales juxtaposées interchangeables; et en ce que d'autre part des marteaux (13) montés pivotants sur des disques (10) coaxiaux montés sur un arbre central (1) mû en rotation, en regard de chacune des extrémités duquel le carter extérieur (14) comporte une ouverture (15) permettant le passage d'un flux d'air de l'extérieur vers l'intérieur sous l'effet d'aspiration créé par le mouvement de rotation.

2. Dispositif selon la revendication 1 caractérisé en ce que les ouvertures (15) sont pratiquées dans le carter extérieur (14), au-dessus et latéralement, autour des paliers (16) portant l'arbre (1).

3. Dispositif selon la revendication 1 ou la revendication 2 caractérisé en ce que la bouche d'évacuation (22) est connectée à un moyen d'aspiration.

4. Dispositif selon l'une quelconque des revendications précédentes caractérisé en ce que les grilles (31, 41) d'attaque comportent des reliefs (5) en forme de V, répartis en quinconce.

5. Dispositif selon l'une quelconque des revendications précédentes caractérisé en ce que la partie hémicylindrique inférieure de la cage 2 est divisée en deux parties distinctes (3, 4) mobiles, montées sur roues (34, 44).
